Europäisches Patentamt

European Patent Office

Office européen des brevets

(11) Publication number: **0 035 620**
**B1**

# EUROPEAN PATENT SPECIFICATION

(45) Date of publication of patent specification: **18.04.84**  (51) Int. Cl.³: **A 47 J 41/02**

(21) Application number: **80400316.8**

(22) Date of filing: **10.03.80**

(54) Method of filling insulating members and insulating members obtained thereby.

(43) Date of publication of application:
**16.09.81 Bulletin 81/37**

(45) Publication of the grant of the patent:
**18.04.84 Bulletin 84/16**

(84) Designated Contracting States:
**AT BE CH DE FR GB IT LU NL SE**

(56) References cited:
**DE - C - 385 061**
**US - A - 3 828 960**
**US - A - 3 916 048**
**US - A - 3 921 844**

(73) Proprietor: **CALGON CORPORATION**
**Route 60-Campbell's Run Road**
**Robinson Township Pennsylvania 15205 (US)**

(72) Inventor: **Wagner, Norman J.**
**1430 Morrow Road**
**Pittsburgh, Pennsylvania 15241 (US)**

(74) Representative: **Corre, Jacques Denis Paul et al,**
**Cabinet Regimbeau 26, Avenue Kléber**
**F-75116 Paris (FR)**

Courier Press, Leamington Spa, England.

Methods of filling insulating members and insulating members obtained thereby

This invention relates to methods of filling insulating members employed for maintaining temperature of an enclosed space at a desired level. More particularly, it relates to methods of filling an insulating means suitable for inclusion in refrigeration devices, and particularly in food service containers both to maintain heated or cooled conditions. This invention especially relates to methods of filling insulation means adopted for use in double walled vacuum bottles and more precisely, Dewar flasks. Even more particularly, this invention is concerned with vacuum bottles constructed of plastic materials wherein the vacuum chamber is at least partially filled with activated carbon having a density greater than 0.3 grams/cubic centimeter.

The double walled vacuum insulating member employed in the Dewar flask is probably the best known and widely used thermal insulation means for containers. Heat transfer can occur only by conduction through the elements supporting the insulating member, conduction by any residual gas due to imperfect evacuation, and by radiation. Good design minimizes heat transfer by most of these routes, but the choice of materials that can be employed has largely limited the application to rather small containers of silvered glass or metal. More recently, plastic materials are being substituted for the glass or metal materials and are a substantial advance since they can be blow molded they therefore are more economical, and further compared to silvered glass, breakage hazards are less. This latter advantage is especially important when vacuum bottles are intended for use by children. At the present for safety reasons, plastic bottles are employed, but they only employ foamed or other insulation and are ineffective for much longer than a few hours.

Examples of advances in vacuum containers of plastic are shown in U.S.P. 3,921,844; 3,828,960; and 3,916,048.

However, to be an effective commercial substitute for the present vacuum containers it is essential that a high volume of production should be maintained. Thus, problems associated with making these insulating members in sufficient quantities at sufficient speed to justify substitution of materials must be overcome before the inherent economics of the more sturdy plastic vacuum bottles can be generally made available.

The difficulty in mass production of vacuum containers having the evacuated chamber filled with activated carbon is that if the activated carbon is introduced into the container at atmospheric pressures elaborate steps must be taken to later establish a vacuum. One known method is to fill the chamber with carbon dioxide gas and a reactant material such that a chemical reaction ensues and the carbon dioxide gas is consumed subsequent to sealing the container. Another technique is to fill the chamber with the activated carbon, apply a vacuum to the chamber and when the chamber adequately is evacuated, seal the chamber. Unfortunately, this latter procedure takes an inordinate amount of time since the void volume of the activated carbon is only slowly evacuated or degassed. Heating accelerates the process, but excessive heat can deform or damage the plastic housing.

External heating and degassing of the activated carbon prior to filling the vacuum chamber is found preferable. Unfortunately, when the activated carbon is heated and degassed, efforts to transfer degassed activated carbon from an evacuation vessel to the evacuated vacuum chamber without the impetus of a gas stream are exceptionally difficult and the sluggish flow is not adaptable to line production.

Of course, introduction of a gas stream to induce flow is not feasible in the evacuated system without destroying the vacuum. Now it is found that activated carbon having a density of in excess of 0.3 and preferably in excess of 0.65 grams/centimeter$^3$ after degassing according to this invention flows rapidly and without impedance under vacuum.

Those activated carbons suitable for use as the gas scavengers of this invention, most suitably have an air capacity of greater than 0.21 cc./g. at 66.6 Pa. Those activated carbons available from Calgon Corp. designated types PCN; PCB; AFC—2204; and BPL have air capacities of about from 0.40 cc./g. It is also found that iodine number can be employed as a quality control tool to insure adequate air capacity. Activated carbons having iodine numbers in the range 500—550 show preferred air capacities.

The mesh size of the activated carbon can suitably fall in the range of 0.074 mm to 0.029 mm.

Measurements of thermal conductivity indicate that desirable insulating properties are provided when the activated carbon is pulverized to a mesh size in the range of 0.074 mm to 0.029 mm. Fillers such as gyrolite (a diatomaceous earth) and even powdered iron when admixed with the above-preferred activated carbons are found to exhibit infrared radiation further suppressing the thermal conductivity and improving the insulating properties of the activated carbon. Pulverized anthracite was found to have a low thermal conductivity making it acceptable as an inexpensive diluent for high air capacity activated carbons. These diluents can be employed from 0% to 80% by weight of the activated carbon.

Additionally, it is found especially advantageous to include with the activated carbon a fumed silica in an amount of from 0.5% to 1.5% by weight and preferably 1% by weight of the activated carbon and intimately admixed therewith. The fumed silica on a dry basis is 99% by weight silicon dioxide, and is sold under the name CAB—O—SIL, a registered trademark of the Cabot Corp, Boston, Mass. The silicon dioxide selected can have a surface area in the range of from 175 to 420 meters²/gram, and should most suitably fall within the same particle size range as the activated carbon.

In preparing the activated carbon for filling insulation chambers of the type herein referred to, the activated carbon optionally including the fused silica is first sized to the desired mesh. Then, the sized activated carbon is dried by any suitable means, such as passing a low humidity gas stream over or through the activated carbon. The gas stream can consist of methane, nitrogen, or other inert gases such as helium or argon. The drying of the activated carbon can further be accelerated by heating although heating in excess of 150°C. is highly undesirable. One suitable means is to employ a drum dryer and tumble the activated carbon in a heated gas stream. Usually, after drying is complete, the activated carbon has a moisture content of less than 0.1% by weight. Generally, a moisture content much in excess of about 1% is considered unsatisfactory. After drying, the activated carbon is heated to a temperature of from 100°C.—350°C., further prior to the degassing step. Although this additional heating can be accomplished concurrently with degassing, it is generally desirable to heat the activated carbon to this temperature prior to commencing degassing.

In this heating step, the dried activated carbon is most desirably heated to a temperature of 150°C. to 350°C. It is convenient to employ the same apparatus that is employed to accomplish the degassing to facilitate handling of the activated carbon.

If heating is accomplished externally to the means employed to degas the activated carbon, the activated carbon is transferred to degassing means and degassed while hot. Temperatures in excess of 350°C. are allowable, but not desirable, and temperatures in excess of 1000°C are detrimental to the activated carbon.

In the degassing means, a vacuum is applied by any suitable means so that gases adsorbed on the activated carbon are removed. A vacuum is pulled on the degassing means by aspiration, or a pump means. The vacuum level in the degassing means is at least as great as the vacuum desired in the insulation chamber or vacuum bottle. Degassing is deemed complete when that desired vacuum level is reached. Generally, this is 133.3. Pa or less. Then the degassing means and its contents are cooled to a temperature that is below the temperature that would be deleterious to the plastic housing of the insulating member or any gas impermeable lining applied to the walls of the insulation member. A transfer means comprising a suitable connection, e.g., a line of polyethylene between the interior of the degassing means and the evacuated insulation bottle, the activated carbon is fed by gravity into the interior of the vacuum chamber. Mechanical vibration can be suitably employed to further accelerate filling of the void space in the insulation chamber. During this filling procedure the degassing means, the transfer means, e.g., polyethylene tubing, and the insulation chamber of the vacuum bottle are all evacuated. After filling, the insulation member is pinched off and sealed by means known in the art. The vacuum is still maintained in the degassing means and the connection means as the insulation member of a new bottle is evacuated and moved into position for filling. In this manner, a production quantity of vacuum chambers can rapidly be filled.

## Claims

1. A method of filling insulation members while the members are maintained under a vacuum by transferring a heated and degassed activated carbon to the insulated member, the method being characterized in that it comprises drying an activated carbon having a density greater than 0.3 grams/cm³ to a moisture content of less than 3% by weight; heating the activated carbon to a temperature of 150°C.—1000°C. applying a vacuum to said activated carbon so that the vacuum applied to the activated carbon is essentially equivalent to the vacuum level in the evacuated insulation member and causing the activated carbon to flow from the degassing means to the insulation member.

2. A method according to claim 1 where said moisture content is less than 1% by weight.

3. A method according to claim 1 where the activated carbon is dried by passing over said activated carbon gas stream.

4. A method according to claim 3 where said gas stream comprises an inert gas.

5. A method according to claim 4 where said gas is helium.

6. A method according to claim 1 where said drying is conducted by heating the activated carbon to a temperature of from 25°C.—150°C.

7. A method according to claim 1 where the bulk density of said activated carbon is greater than 0.65 g./cc.

8. An insulation member comprising first and second substantially gas impermeable members in spaced relation; said members in sealing engagement about a closed figure defining therebetween at least one gas impermeable chamber; a vacuum applied to said chamber; said chamber being at least partially filled according to the method of claim 1 with an activated carbon having a bulk density in excess of 0.3 g./cm³.

**Patentansprüche**

1. Verfahren zum Füllen Isolierteilen während die Teile unter Vakuum gehalten werden durch Übertragen von erwärmter und entgaster Aktivkohle zu dem Isolierteil, dadurch gekennzeichnet, daß eine Aktivkohle mit einer Dichte von größer als $0{,}3 \text{ g/cm}^3$ auf einen Feuchtigkeitsgehalt von weniger als 3 Gew.-% getrocknet wird; die Aktivkohle auf eine Temperatur von 150°C—1000°C erwärmt wird, ein Vakuum an diese Aktivkohle angelegt wird, so daß das an die Aktivkohle angelegte Vakuum im wesentlichen äquivalent zur Höhe des Vakuums in dem evakuierten Isolierteil ist, und Strömenlassen der Aktivkohle von der Entgasungseinrichtung zu dem Isolierteil.

2. Verfahren nach Anspruch 1, bei dem der Feuchtigkeitsgehalt weniger als 1 Gew.-% beträgt.

3. Verfahren nach Anspruch 1, bei dem die Aktivkohle getrocknet wird durch Leiten eines Gasstroms über die Aktivkohle.

4. Verfahren nach Anspruch 3, bei dem der Gasstrom ein Inertgas umfaßt.

5. Verfahren nach Anspruch 4, bei dem das Gas Helium ist.

6. Verfahren nach Anspruch 1, bei dem die Trocknung durchgeführt wird durch Erwärmen der Aktivkohle auf eine Temperatur von 25°C—150°C.

7. Verfahren nach Anspruch 1, bei dem die Schüttdichte der Aktivkohle größer als 0,65 g/ccm ist.

8. Isolierteil, enthaltend erste und zweite, in Abstand voneinander befindliche, im wesentlichen gas-undurchlässige Teile; wobei sich diese Teile in abdichtender Verbindung um eine geschlossene Figur herum befinden und dazwischen mindestens eine gas-undurchlässige Kammer bilden; ein Vakuum an diese Kammer angelegt ist; und diese Kammer zumindest teilweise nach der Verfahrensweise des Anspruchs 1 mit einer Aktivkohle mit einer Schüttdichte über $0{,}3 \text{ g/cm}^3$ gefüllt ist.

**Revendications**

1. Procédé pour remplir des éléments isolants pendant que ceux-ci sont maintenus sous vide, par transfert de charbon actif chauffé et dégazé dans l'élément isolant, le procédé étant caractérisé en ce qu'il comprend le séchage d'un charbon actif d'une densité supérieure à 0,3 g/cm3, jusqu'à une teneur en humidité inférieure à 3% en poids; le chauffage du charbon actif jusqu'à une température de 150°C—1000°C, l'application du vide audit charbon actif de façon que le vide appliqué soit sensiblement équivalent au niveau du vide dans l'élément isolant où l'on a fait le vide et l'écoulement du charbon actif depuis l'appareil de dégazage jusqu'à l'élément isolant.

2. Procédé selon la revendication 1, caractérisé en ce que la teneur en humidité est inférieure à 1% en poids.

3. Procédé selon la revendication 1, caractérisé en ce qu'on sèche le charbon actif en faisant passer un courant de gaz par dessus le charbon actif.

4. Procédé selon la revendication 3, caractérisé en ce que le courant gazeux comprend un gaz inerte.

5. Procédé selon la revendication 4, caractérisé en ce que le gaz est l'hélium.

6. Procédé selon la revendication 1, caractérisé en ce que le séchage est effectué en chauffant le charbon actif à une température de 25°C—150°C.

7. Procédé selon la revendication 1, caractérisé en ce que la densité apparente du charbon actif est supérieure à 0,65 g/cc.

8. Elément isolant comprenant un premier et un second éléments espacés, sensiblement imperméables aux gaz; lesdits éléments étant scellés autour d'un espace clos qui définit entre lesdits éléments au moins une chambre imperméable aux gaz; le vide étant appliqué à ladite chambre; ladite chambre étant au moins partiellement remplie suivant le procédé selon la revendication 1, par un charbon actif d'une densité apparente supérieure à 0,3 g/cm3.